# EUROPEAN PATENT SPECIFICATION

(11) **EP 3 348 141 B1**
(45) Date of publication and mention of the grant of the patent: **27.07.2022**
(21) Application number: 16863851.8
(22) Date of filing: 07.07.2016
(51) Int. Cl.: A01M 7/00, A01G 9/24

(54) **DEVICE FOR CONTROLLING PESTS IN PLANT CULTIVATION ROOM**
VORRICHTUNG ZUR BEKÄMPFUNG VON SCHÄDLINGEN IN EINEM PFLANZENZUCHTRAUM
DISPOSITIF DE LUTTE CONTRE DES ORGANISMES NUISIBLES DANS UNE SALLE DE CULTURE DE PLANTES

(30) Priority: 10.11.2015 JP 2015220283
(43) Date of publication of application: 18.07.2018
(73) Proprietor: H. Ikeuchi & Co., Ltd., Osaka-shi Osaka 550-0011 (JP)
(72) Inventor: HIKOSAKA, Yousuke, Osaka-shi Osaka 550-0011 (JP); SUMISAKI, Yuki, Osaka-shi Osaka 550-0011 (JP)
(74) Representative: V.O.
(86) International application number: PCT/JP2016/070095
(87) International publication number: WO 2017/081887

(56) References cited:
- WO-A1-2015/174493
- JP-A- H10 178 935
- JP-A- 2002 186 400
- JP-A- 2002 186 400
- JP-A- 2010 163 378
- JP-A- 2012 115 256
- JP-A- 2014 019 674
- US-A- 4 956 936
- John W. Bartok ET AL: "Greenhouse & Floriculture: Mist and Fog Equipment for Propagation", , 1 January 2009 (2009-01-01), pages 1-7, XP055581896, Retrieved from the Internet: URL:https://ag.umass.edu/greenhouse-floric ulture/fact-sheets/mist-fog-equipment-for- propagation [retrieved on 2019-04-17]

## Description

### TECHNICAL FIELD

The present invention relates to a device for controlling pests in a plant cultivation room and more particularly to a pest controlling device for spraying a liquid chemical containing a pest control agent inside the plant cultivation room such as a vinyl house, a glass house (so-called greenhouse) and the like.

### BACKGROUND ART

In vinyl houses, glass houses, solar utilization type plant factories, and the like for cultivating plants, meshes and the like are set at open portions to prevent pests from entering the vinyl houses and the like. But it is impossible to prevent entering of pests owing to going in and out of workers and materials, entering of pests from gaps of the houses, and entering of pests smaller than mesh sizes, and entering of fungi and viruses causing diseases. Therefore, production workers spray agricultural chemicals at regular intervals to exterminate pests. But workers are subjected to a large workload and a hard work. In addition, the inhalation of a chemical agent may cause the workers to be adversely affected in their health.

As pest control methods for plants being cultivated, there are proposed an electrostatic control method disclosed in Patent No. 3208190 (patent document 1) and a fog type control method disclosed in Japanese Patent Application Laid-Open Publication No. 2001-95461 (patent document 2).

In the patent document 1, the electrostatic spraying method is used to attach a liquid chemical to the lower surfaces of leaves of plants being cultivated. In this method, the liquid chemical is atomized and sprayed from the fog machine carried by a worker, and a comparatively low voltage of 300 to 800V is applied to the atomized particles to impart an electric charge (static electricity) to them.

In the patent document 2, the liquid chemical is sprayed from the fog machine by unattendedly moving the fog machine. To prevent the pest control agent sprayed from the fog machine from being directly applied to crop, the spray is automatically stopped when a fog spray direction is directed to the crop.

### PRIOR ART DOCUMENT

### PATENT DOCUMENT

Patent document 1: Japanese Patent Publication Number 3208190
Patent document 2: Japanese Patent Application Laid-Open Publication Number 2001-95461
Patent document 3: JP2012-115256 discloses a cooling apparatus for cooling the inside of a greenhouse for cultivating plants by spraying micro mist, when it is superheated. An intake blower with a nozzle is installed at least one side out of the lower part and the middle high part of the greenhouse. The outlet side of the intake blower locating inside of the greenhouse is brought to be lateral when it is installed to the lower part, while it is brought to be inclined downward when it is installed to the middle high part. The nozzle is attached to the outlet side and spraying is carried out into the greenhouse from the nozzle, and at the same time, the spraying is put on an air blow discharged from the intake blower, while an exhaust blower for exhausting air in the greenhouse to the outside is installed to the upper part of the greenhouse, and the relative positional relation of the intake blower with the nozzle to be installed to the inside of the greenhouse and the exhaust blower to be installed to the upper part of the greenhouse is set so that the spraying from the nozzle can circulate inside of the greenhouse.
Patent document 4: JPH10-178935 discloses a mist atomization system characterized by attaching plural fine mist supply nozzles in series to the line of crops at equal intervals in the same direction, the range of flight of fine mist is extended by the synergistic effect of spray pressure at the respective fine mist nozzle. Thus, the number of fine mist spray nozzles to be attached is decreased, a piping header is fixed on the pipe of gardening house and functioned as a reinforcing member for the facility house, and a support is fixed on the reinforcing member at low position.
Patent document 5: US4956936 discloses a method and system for purification of water for plants in a greenhouse structure. The method comprises condensing water vapor in the air in the greenhouse on the greenhouse walls, collecting the condensed water at the base of the walls and passing the collected water to the roots of the plants. To accomplish this method the system comprises a water supply for water to be purified, a mist generator for the air in the greenhouse from the water supply means and a heat source to generate heat in the greenhouse for vaporization of the mist. Cooling means are provided for the walls to cause water vapor in the air in the greenhouse to condense on the interior surfaces of the walls. The condensed water is collected and carried by conduit means to a nutrient solution reservoir for admixture with nutrient to be supplied to the roots of the plant.

### NON-PATENT DOCUMENT

John W. Bartok et al., "Greenhouse & Floriculture: Mist and Fog Equipment for Propagation", 1 January 2009 (2009-01-01), pages 1-7, XP055581896, discloses a comparison of mist and fog greenhouse systems. In the context of fog systems application of insecticides and fungicides is mentioned.

### SUMMARY OF THE INVENTION

### PROBLEMS TO BE SOLVED BY THE INVENTION

In the patent document 1, the use of the electrostatic spraying method may cause the occurrence of a short circuit because the spray nozzle is electrically charged. An automatic movement of the spray nozzle costs high. Thus, the liquid chemical is atomized and sprayed from the fog machine carried by the worker, which subjects the worker to hard labor. In addition, when the inside of the house is filled with agricultural chemicals, the worker has health problems.

In the patent document 2, because the liquid chemical is sprayed by automatically travelling the fog machine, the method costs high as pointed out in the above description of the method of the patent document 1. In the method, the liquid chemical is prevented from being directly applied to the plant. But by only floating the liquid chemical in the air, in many cases, it is impossible to exterminate pests which attach to the plant and to the rear sides of leaves.

The present invention has been made in view of the above-described problems. It is an object of the present invention to provide a device for controlling pests in a plant cultivation room which sprays a liquid chemical inside the plant cultivation room without adversely affecting a worker and is capable of reliably exterminating pests which attach to plants being cultivated.

### MEANS FOR SOLVING THE PROBLEMS

To solve the above-described problems, the present invention provides a device for controlling pests in a plant cultivation room as defined in claim 1.

As described above, in the present invention, the liquid chemical to be sprayed inside the plant cultivation room (hereinafter referred to as cultivation room) consists of the droplets whose diameters are not more than 100µm and whose average diameter is not less than 10µm nor more than 30µm. The diameters of the droplets of the sprayed liquid chemical which can be floated in the air are not more than 100µm. By floating the droplets whose diameters are not more than 100µm inside the cultivation room, it is possible to attach the liquid chemical to the lower surfaces of leaves of plants, although it is difficult to attach the liquid chemical thereto. Thus, it is possible to control pests by uniformly attaching the liquid chemical to the upper and lower surfaces of the leaves. In addition, when the diameters of the droplets exceed 100µm, the droplets excessively attach to the upper surfaces of the leaves. As a result, the upper surfaces of the leaves become wet, which may cause the leaves to suffer from harmful effects of the liquid chemical. Further, there occurs a vicious circle that coarse fog consisting of droplets exceeding 100µm does not vaporize fully and the droplets become large and thus it becomes more difficult for the droplets to vaporize. Further the planted surface of the ground becomes wet. Thus, the liquid chemical is wastefully used. According to experiments conducted by the present applicant, it was confirmed that it is possible to decrease the use amount of agricultural chemicals having the above-described average droplet diameter when it is sprayed to about 1/2 of the use of agricultural chemicals having an average droplet diameter of not less than 100µm no more than 300µm when it is sprayed.

When the average particle diameter of droplets of the sprayed liquid chemical is smaller than 10µm, the spray amount is small and thus a sufficient spray effect cannot be obtained. In addition, there occurs a problem that equipment and running costs become high to generate droplets whose average diameter is smaller than 10µm.

In the present invention, the droplets of fine fog sprayed from the nozzles have diameters of not more than 100µm. The humidity inside the cultivation room is maintained at not less than 90% nor more than 100%. The reason the liquid chemical is sprayed until the humidity inside the cultivation room reaches 90% is because if there is a portion where the liquid chemical does not reach, pests may fly to the portion where the liquid chemical does not reach. Thus, there is a fear that the pests cannot be exterminated. When the humidity reaches 90% or more, it is possible to securely eliminate a portion inside the cultivation room where the liquid chemical does not reach and exterminate pests which have entered the cultivation room with the liquid chemical.

As described above, humidity control is executed by spraying the liquid chemical so that the humidity inside the cultivation room reaches the target humidity in the range from not less than 90% to not more than 100%. In executing the humidity control, the liquid chemical may be successively sprayed until a predetermined humidity, for example, 85% lower than a set target humidity is attained. When the humidity reaches 85%, the liquid chemical may be intermittently sprayed until the humidity inside the cultivation room reaches the set target humidity. By successively spraying the liquid chemical from the nozzle until the humidity reaches the predetermined humidity and thereafter intermittently spraying the liquid chemical until the humidity reaches the set target humidity, it is possible to stabilize the humidity inside the plant cultivation room.

In controlling the humidity inside the plant cultivation room, although the spray of the liquid chemical is stopped by a timer or a humidity sensor, the liquid chemical is not necessarily automatically sprayed. This is because by starting the spray of the liquid chemical by a manual operation when a worker finds pests, it is possible to prevent the liquid chemical from being wastefully used. Further, because the liquid chemical is not filled fully inside the cultivation room when the spray of the liquid chemical starts, the worker does not have a problem. After an automatic spray starts, the worker leaves the cultivation room. When the liquid chemical is filled inside the cultivation room, the worker is adversely affected. Thus, the spray from the nozzle is stopped based on a timer or a detected value of a humidity sensor.

Piping headers are installed in an upper space inside the plant cultivation room; and the nozzles are attached to each of the piping headers at certain intervals

In a case where the piping headers to which the nozzles are attached are installed in a large cultivation room where a plurality of ridges are formed, a plurality of piping headers may be installed in the longitudinal direction of the cultivation room with the piping headers being located upward from portions between the ridges.

Regarding spray injected from each of the nozzles, a spray amount is 0.37ml/second to 5.61ml/second, a spray pressure is 2MPa to 6MPa, and a spray angle is 50 to 80 degrees. The nozzles are attached to the piping headers at intervals of 100cm to 300cm or to the ring header of the fan at intervals of 10cm to 20cm.

As the nozzle, it is preferable to use a nozzle which sprays semi-dry fog consisting of droplets whose diameters are not more than 100µm and whose average diameter is not less than 10µm nor more than 30µm. Dry fog floats in the air and is not wet and thus does not attach to objects. The semi-dry fog attaches to objects, but vaporizes instantly. It is possible to float the semi-dry fog having the average diameter of 10µm to 30µm in the air for a long time and vaporize it in the air.

In accordance with the invention, a liquid chemical-side branch pipe and a water-side branch pipe is coupled to a liquid flow pipe connected to the piping headers to which the nozzle have been attached through a change-over valve to supply water to the nozzles as cleaning water after the liquid chemical is supplied thereto and selectively use the nozzles as a fine mist cooling nozzle and a humidifying nozzle by supplying water to the nozzles.

As described above, the nozzles are used to spray the liquid chemical and water. The liquid flow pipe connected to the nozzles is bifurcated into the liquid chemical-side branch pipe and the water-side branch pipe at a position downstream from a pump mounted on the liquid flow pipe. The liquid chemical-side branch pipe is connected to a liquid chemical tank, whereas the water-side branch pipe is connected to a water tank.

Water is sprayed to clean the nozzles after the liquid chemical is sprayed therefrom, cool the air inside the cultivation room when the temperature inside the cultivation room becomes high in summer, and humidify the air inside the cultivation room when the air inside the cultivation room becomes dry in winter.

It is possible to use the nozzles for the spray of the liquid chemical, cleaning, cooling, and humidification. Thus, it is possible to make the state inside the cultivation room optimum without increasing costs.

In spraying water for fine mist cooling and humidification, it is possible to vaporize droplets by floating them in the air because the diameters of the droplets sprayed from the nozzles are not more than 100µm and because the average particle diameter of the droplets is not less than 10µm nor more than 30µm to generate semi-dry fog. Thus, leaves become wet, which prevents the growth of leaves from being restrained.

To automatically start and stop the spray of the liquid chemical from the nozzles, it is preferable to install a humidity sensor or a timer inside the plant cultivation room and provide the pest control device with a control device for receiving a detected value from the humidity senor to turn on and off the spray of the liquid chemical from the nozzles so that the detected value of the humidity sensor falls within a set range or the timer is used to turn on and off the spray of the liquid chemical.

Alternatively, the device for controlling pests may have a control device which sets a condition of starting the spray of the liquid chemical and a condition of stopping the spray of the liquid chemical are set in advance and which has a program of spraying cleaning water for a predetermined period of time after the spray of the liquid chemical is stopped.

The start of the spray of the liquid chemical from the nozzles, the stop of the spray thereof, and subsequent cleaning may be executed unattendedly at regular intervals based on the program registered in the control device.

When the liquid chemical is successively sprayed until the humidity inside the cultivation room reaches a predetermined humidity and thereafter intermittently sprayed until the humidity inside the cultivation room reaches a set target humidity, it is preferable to set the predetermined humidity, the target humidity, and an intermittent operation condition by means of the program in advance.

As described above, complete unmanned pest control may be performed by spraying the liquid chemical at regular intervals in the season when pests breed. In stopping spraying the liquid chemical based on the program control, the spray of the liquid chemical may be stopped when a detected value of a hygrometer or that of a thermometer installed inside the cultivation room reaches a set threshold. In addition, the period of time in which the humidity inside the cultivation room becomes not less than 90% is measured in advance based on the spray amount of the nozzles and the volume of the cultivation room to execute timer control of automatically stopping the spray of the liquid chemical when the set period of time lapses after the spray starts.

By supplying water to the nozzles for a predetermined period of time to clean the nozzles after the liquid chemical is sprayed from the nozzles, it is possible to prevent liquid chemical-caused clogging from occurring inside the nozzles. Thus, the nozzles can be used without maintenance.

In spraying water from the nozzles to cool the air inside the cultivation room with fine mist or humidify the air inside the cultivation room, it is preferable to control the start and stop of the spray when values detected by a temperature sensor and a humidity sensor installed inside a greenhouse or a vapor pressure deficit value calculated from the detected values reach a threshold set in the program registered in the control device. For example, it is preferable to set the program in such a way that the spray from the nozzles is started when the temperature inside the cultivation room reaches 30 degrees C and is stopped when the temperature is less than 30 degrees C or the humidity becomes 80 % or more.

It is preferable that the nozzles are attached to the piping headers extended in a longitudinal direction of the plant cultivation room by adjacently disposing the nozzles at certain intervals in a longitudinal direction of the piping headers in such a way that spray ranges of the nozzles contact each other or are spaced at gaps not more than 300cm.

The nozzles are attached to both side surfaces of the piping headers in a width direction thereof orthogonal to the longitudinal direction thereof by disposing the nozzles oppositely to each other or arranging the nozzles in a staggered manner.

As described above, by locating the nozzles at positions where the spray ranges of adjacent nozzles contact each other, it is possible to eliminate portions where the liquid chemical does not reach. Even though the nozzles are so disposed that the spray ranges of the adjacent nozzles are spaced at gaps not more than 300cm, the entire region inside the cultivation room is securely filled with droplets of the liquid chemical floating in the air, because the diameters of droplets sprayed from the nozzles are set to not more than 100µm, and the average diameter of the droplets is set to not less than 10µm nor more than 30µm. Further the nozzles are attached to both sides of the piping headers by disposing the nozzles oppositely to each other or arranging the nozzles in a staggered manner. Thereby it is possible to efficiently fill the entire region inside the cultivation room with the liquid chemical. By securely eliminating the portions where the liquid chemical does not reach in this manner, it is possible to securely exterminate pests which enter the cultivation room.

As the nozzle to be used in the present invention, a one-fluid nozzle for spraying only the liquid chemical or only water is preferably used. As the nozzle to be used in the present invention, a one-fluid nozzle having a nozzle tip having an injection orifice formed at a liquid flow-out side of a check valve whose stop valve is urged toward a valve-closing direction is preferably used.

As the one-fluid nozzle having the check valve, the present applicant's spray nozzle having the check valve disclosed in the publication of Japanese Patent No. 5118410 is preferably used.

Pests and plant diseases to be controlled by the liquid chemical sprayed from the nozzle of the present invention include aphid, grey mold (botrytis), powdery mildew (erysiphaceae fungus), and mildew disease (leaf mold fungus).

As liquid chemicals to be used to control pests, emulsion commercially available, a liquid medicine, water-soluble powders, water-dispersible powders, and flowable-type pesticide are used.

### EFFECT OF THE INVENTION

As described above, in the present invention, the liquid chemical to be sprayed inside the cultivation room consists of droplets whose diameters are not more than 100µm and whose average diameter is not less than 10µm nor more than 30µm to allow the droplets to float in the air. Further, the inside of the cultivation room is filled with the sprayed liquid chemical at a humidity of not less than 90% nor more than 100%. Therefore, it is possible to attach the liquid chemical to the lower surfaces of leaves of plants, although it is difficult to attach the liquid chemical thereto. Thus, it is possible to control pests by attaching the liquid chemical to both upper and lower surfaces of the leaves. Further the diameters of the droplets are set to not more than 100µm. Thus, even though the liquid chemical attaches to the leaves, the leaves do not become wet, which eliminates a fear that the leaves suffer from harmful effects of the liquid chemical. Further, it does not occur that coarse fog does not vaporize fully, forms large droplets, and fall to the planted surfaces of the ground. Thus, it is possible to decrease the amount of the liquid chemical to be used.

In addition, because the spray of the liquid chemical from the nozzles is automatically stopped by means of the humidity sensor or the timer control, the liquid chemical can be sprayed after a worker left the cultivation room. Thus, there is no fear that the liquid chemical adversely affects the worker.

By supplying water to the nozzles to clean the nozzles after the liquid chemical is sprayed therefrom, it is possible to prevent liquid chemical-caused clogging from occurring. Further, the nozzles can be utilized for many purposes by spraying water from the nozzles for fine mist cooling and for humidification. In spraying water to cool and humidify the air, the diameters of water droplets are set to not more than 100µm to allow the water droplets to easily vaporize. Therefore, it is possible to restrain and prevent non-vaporized water droplets from attaching to plants.

### BRIEF DESCRIPTION OF THE DRAWINGS

Fig. 1 shows a plant cultivation room of a first embodiment of the present invention. Fig. 1(A) is a perspective view. Fig. 1(B) is a sectional view in a vertical direction. Fig. 1(C) is a sectional view in a horizontal direction.
Fig. 2 is an explanatory view for explaining piping headers, having nozzles attached thereto, which are installed inside the plant cultivation room shown in Fig. 1 and a liquid supply flow path through which a liquid is supplied to the piping headers.
Fig. 3(A) is a plan view showing a nozzle to be attached to the piping header. Fig. 3(B) is a sectional view of the nozzle. Fig. 3(C) is a perspective view showing main parts of Fig. 3(A).
Fig. 4 is a schematic plan view showing a modification of arrangement positions of the nozzles to be attached to the piping headers.
Figs. 5(A) and 5(B) show a modification of the arrangement of the piping headers inside the cultivation room.
Fig. 6(A) and 6(B) show a modification of the nozzle to be attached to the piping header.
Fig. 7 shows arrangement of parts installed inside a plant cultivation room of an example not falling within the scope of the claims, wherein (A) is a schematic plan view and (B) is a side view of (A).
Fig. 8(A) is a side view showing a state in which an air blower having a nozzle-attached fan is set at a high position with the air blower being mounted on an elevating machine. Fig. 8(B) is a side view showing a state in which the air blower is set at a low position by lowering the elevating machine.
Fig. 9 is a front view of a ring header to which nozzles of the fan are attached.
Fig. 10 is an explanatory view showing a state in which a liquid chemical is sprayed to front and lower surfaces of leaves of a plant being cultivated.
Figs. 11(A) and 11(B) show a modification of the second embodiment.

### MODE FOR CARRYING OUT THE INVENTION

The embodiments of the present invention are described below with reference to the drawings.

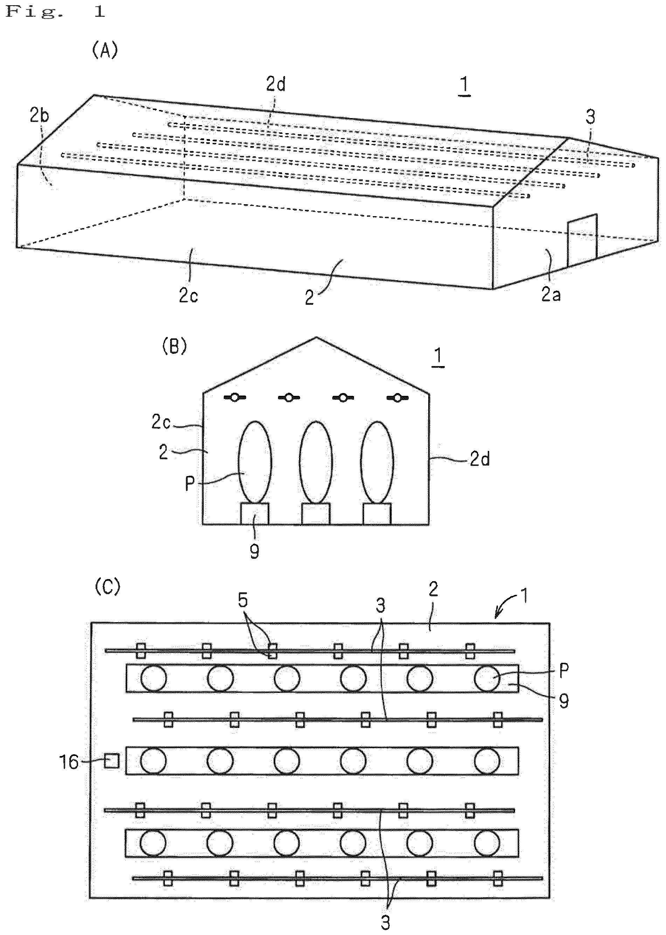

Figs. 1 through 3 show a device for controlling pests in plant cultivation room of a first embodiment installed inside a plant cultivation house.

In the first embodiment, piping headers 3 each having nozzles 5 attached thereto are installed in an upper part inside a cultivation room 2 surrounded with a plant cultivation house 1 consisting of a vinyl house. The nozzles 5 are used for many purposes of spraying a liquid chemical, fine mist cooling, and humidification. Ridges 9 or cultivation beds for comparatively short plants P such as tomato, strawberry, lettuce are installed inside the cultivation room 2.

As shown in Fig. 1, the cultivation room is rectangular in its horizontal section and surrounded with peripheral walls 2a through 2d and a ceiling. Opening/closing doors and windows with meshes are provided at appropriate positions of the peripheral walls 2a through 2d.

Each of the piping headers 3 to be provided inside the cultivation room 2 consists of a liquid supply round pipe. The piping headers 3 are disposed over almost the entire length of the cultivation room 2 in a longitudinal direction thereof by arranging the piping headers at upper positions interposed between adjacent ridges 9. Thus, the piping headers 3 are arranged in a width direction of the cultivation room orthogonal to the longitudinal direction of the cultivation room. In the first embodiment, the number of the piping headers 3 is four. The vertical position of each piping header is set higher than an expected height of the plant P at the time of growth.

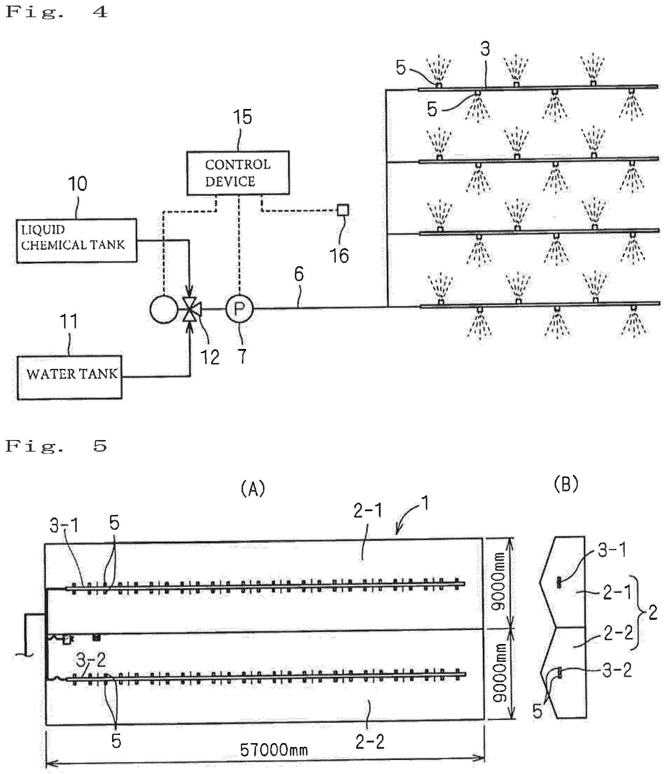

The nozzles 5 are attached to each piping header 3 at both sides in the width direction thereof. As shown in Fig. 4, the nozzles 5 to be attached to both sides of each piping header 3 may be arranged in a staggered manner by attaching the nozzles thereto alternately in the longitudinal direction of the piping header. The positions of the adjacent nozzles 5 to be attached to each piping header 3 are spaced at a dimension of L1. The dimension L1 is differentiated according to a spray range of the nozzle 5 to be attached to the piping header. The nozzles 5 to be used in the first embodiment are spaced at intervals of 100 to 300cm (200cm in the first embodiment) so that the spray ranges (fs) of the adjacent nozzles 5 contact each other. Thereby sprays injected from the nozzles 5 spread over the entire plant cultivation region of the cultivation room 2.

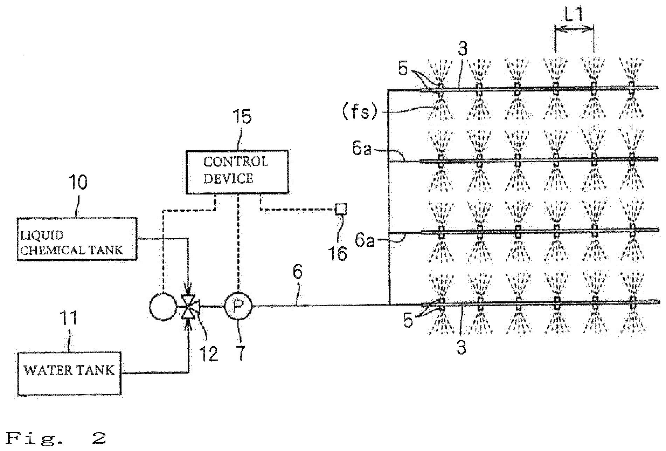

As shown in Fig. 2, one end of each of the four piping headers 3 installed inside the cultivation room 2 is connected to one of four pipes 6a branched from one common liquid supply pipe 6, whereas the other end of each piping header 3 is closed. After the pump 7 is installed on the common liquid supply pipe 6, the common liquid supply pipe is branched to a liquid chemical-side branch pipe connected to a liquid chemical tank 10 and to a water-side branch pipe connected to a water tank 11. A three-way electromagnetic valve 12 is mounted at a branched position of the common liquid supply pipe to selectively supply the liquid chemical and water to the nozzles 5.

A control device 15 controls the drive of the pump 7 and that of the three-way electromagnetic valve 12. The control device 15 sends operation signals to the pump 7 and the three-way electromagnetic valve 12, based on a program registered therein in advance. Humidity and temperature inside the cultivation room 2 detected by a temperature-humidity sensor 16 installed inside the cultivation room 2 are sent to the control device 15.

The nozzles 5 mounted on the piping headers 3 generate semi-dry fog, droplets of which have diameters not more than 100µm and an average diameter not less than 10µm nor more than 30µm. Because the nozzles 5 spray the semi-dry fog, the droplets thereof do not drop, but can be floated in the air inside the cultivation room.

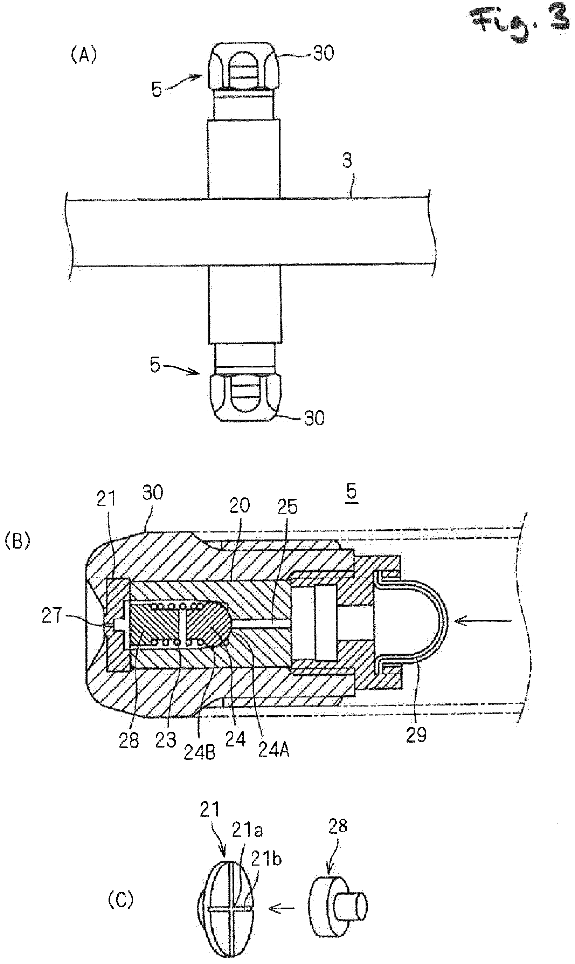

As the nozzle 5, a one-fluid nozzle, shown in Fig. 3, consisting of a spray nozzle having a check valve is used. The spray nozzle is disclosed in the publication of Japanese Patent No. 5118410 obtained by the present applicant. The spray nozzle having the check valve has a feature of allowing a fluid to circulate through the check valve in one go at a required pressure and a required flow rate when the check valve is opened and shutting off a flow path in one go when the supply of the fluid is stopped to shorten a period of time in which the fluid is sprayed at a low pressure and make it difficult for water stop failure to occur so that the dripping of the fluid from the spray nozzle is prevented.

The nozzle 5 accommodates a check valve 20 inside a housing 30 and a nozzle tip 21 with a closer 28 being disposed at a liquid flow-out side of the check valve 20. Inside the check valve 20, a spring 23 is mounted in a compressed state between the closer 28 and a stop valve 24 made of rubber to urge the stop valve 24 in a valve closing direction. The nozzle 5 is so constructed that by the pressure of a liquid which flows into the check valve 20 from a throttle flow path 25 disposed at a liquid inflow side, the stop valve 24 is moved against the urging force of the spring 23 to open a first sealing part 24A of a valve seat and a second sealing part 24B thereof to thereby inject the liquid from an injection hole 27 provided on the nozzle tip 21. A strainer 29 is mounted at the liquid inflow side to flow the liquid, having a required pressure, which has flowed from the piping header 3 into the check valve 20 after the liquid passes through the strainer 29.

As shown in Fig. 3(C), the nozzle 5 is so constructed that four flow paths 21b communicating with a central injection hole 21a from an outer peripheral side of the nozzle tip 21 are provided on an inflow-side end surface of the nozzle tip 21 at intervals of 90 degrees to introduce the liquid into outer peripheral portions of the flow paths 21b from a gap formed on an outer peripheral surface of the closer 28 so that water which has flowed into the nozzle tip 21 is swirled to flow the water into the central injection hole 21a to inject the water from the injection hole 27 disposed at the front end of the nozzle tip.

When a liquid chemical or water is supplied to the one-fluid nozzles 5 from the piping headers 3 at a required water pressure set by a discharge pressure of the pump 7, the liquid chemical or the water passes through the throttle flow path 25 disposed at the inflow side of the check valve 20 to open the check valve. In detail, in a valve-opening operation of the check valve 20, after the first sealing part 24A of the valve seat opens against the urging force of the spring 23, the second sealing part 24B opens instantly to allow the liquid having a predetermined water pressure to pass therethrough in one go. When the second sealing part 24B opens and the stop valve 24 moves to the side of the closer 28, the liquid which has passed the second sealing part 24B flows into the flow path 21b of the nozzle tip 21 through the gap and is injected from the injection hole 27 disposed at the front end of the nozzle through the central injection hole 21a. When the supply of the liquid is cut off, the first sealing part 24A of the check valve 20 and the second sealing part 24B thereof close.

As apparent from the foregoing description, the nozzle 5 is so constructed that when the check valve 20 opens, it does not occur that a small amount of water flows into the injection hole 27 little by little, but the water can be sprayed at a required water pressure in one go. Thus, the spray pattern does not become turbulent. In addition, at the outflow path side of the check valve 20, because the water is flowed to the nozzle tip 21 through the gap, the gap acts as a throttle flow path of the water. Thus, it is possible to allow the water to have a high pressure from a start time of injection and atomize droplets. Thereby it is possible to spray the liquid as fine droplets having an average diameter of 10 to 30µm. When the supply of the water is stopped, the water hardly accumulates in a range from a closing position of the check valve 20 to the injection hole 27. Thus, it is possible to prevent the droplets from dripping from the injection hole 27.

As described above, the nozzle 5 sprays droplets each having a particle diameter of not more than 100µm and an average particle diameter of 10µm to 30µm. The amount of the spray injected from the nozzle is 0.37ml/second to 5.61ml/second. The pressure of the spray is 2MPa to 6MPa. The angle of the spray is 50 to 80 degrees.

The control device 15 automatically executes the start of the spray of the liquid chemical, the stop of the spray thereof, the subsequent supply of cleaning water to the nozzle for a predetermined period of time, the start of the spray for fine mist cooling, the stop of the spray for fine mist cooling, the start of spray for humidification, and the stop of the spray for humidification.

In the first embodiment, during the season in which pests breed, the liquid chemical is automatically sprayed once every three days. When the temperature-humidity sensor 16 installed inside the cultivation room 2 detects that the humidity is 90% to 100%, the spray of the liquid chemical is stopped, and water is supplied to the nozzles 5 for 10 minutes to clean the nozzles 5 after the supply of the water thereto is stopped. In this manner, the spray of the liquid chemical and the cleaning of the nozzles are carried out unattendedly at regular intervals.

A worker may start the spray by operating an operation button when the worker finds pests. The worker leaves the cultivation room 2 after the spray starts. The spray is automatically stopped.

It is possible to install cameras inside the cultivation room 2 to send images photographed by the camera to the control device 15. In a case where pests or worm-eaten states are detected from the images, the liquid chemical may be sprayed.

When the liquid chemical is sprayed from the nozzles 5, it is possible to float the liquid chemical in the air because the average particle diameter of the sprayed liquid chemical is not less than 10µm nor more than 30µm. Because the nozzles 5 are so disposed that the spray ranges of the adjacent nozzles are adjacent to each other, it is possible to spread the liquid chemical over the whole region of the cultivation room 2 where the plant P is cultivated. In addition, because the liquid chemical is sprayed until the humidity of the liquid chemical reaches the set target humidity 90%, it is possible to fill the cultivation room 2 entirely in the height direction thereof with the liquid chemical. Consequently, the droplets of the sprayed liquid chemical float in the air. Thus, it is possible to attach the liquid chemical to the upper surface (surface) of the plant P by the spray which falls from the nozzles 5 located above the plant and also attach the liquid chemical to the lower surfaces (lower surfaces) of leaves, although it is difficult to attach the liquid chemical thereto. Consequently, it is possible to expel pests which attach to the lower surfaces of the leaves by the liquid chemical. Further, droplets which attach to the leaves evaporate because they are small. Thus, unlike coarse fog, it is possible to prevent the droplets from becoming large and thus prevent the leaves from becoming wet. Therefore, it is possible to prevent a vicious circle from occurring because the liquid chemical is not excessively supplied to the plant.

The liquid chemical is successively sprayed from the nozzles until the humidity inside the cultivation room reaches a predetermined humidity of 85% lower than a set target humidity of 90% and thereafter intermittently sprayed until the humidity inside the cultivation room reaches the set target humidity of 90%. The liquid chemical may be successively sprayed from the nozzles until the humidity inside the cultivation room reaches the set target humidity of 90%.

Because the spray of the liquid chemical is automatically stopped, the worker can leave the cultivation room 2 while the liquid chemical is being sprayed and is thus not adversely affected by the liquid chemical.

The above-described system for spraying the liquid chemical is utilized for fine mist cooling and humidification.

That is, the control device 15 receives a detected value sent from the temperature-humidity sensor 16. When a detected temperature (for example, 30 degrees) reaches a value set in the program, water is sprayed from the nozzle to perform fine mist cooling. When the detected temperature inside the cultivation room 2 drops to a predetermined temperature (26 degrees), the spray of water is stopped.

When the humidity inside the cultivation room 2 decreases, water is sprayed from the nozzles 5 to humidify the air inside the cultivation room 2.

When water is sprayed over the entire region inside the cultivation room 2 from nozzles 5, fine mist flows inside the cultivation room. While the fine mist is flowing, droplets vaporize by depriving the ambience of heat of vaporization, thereby allowing the internal temperature of the cultivation room 2 to be rapidly lowered. Water is sprayed from the nozzles 5 from the upper part of the cultivation room toward locations below the root of the plant P.

When the temperature inside the cultivation room 2 reaches the set temperature by the spray of the water or when the humidity reaches the predetermined value (for example, 80%), the spray of water from the nozzle 5 is stopped.

It is possible to automatically cool the air inside the cultivation room according to the rise of the temperature inside the cultivation room and automatically stop the cooling when the temperature inside the cultivation room lowers to the set temperature. Thereby it is possible to prevent the air inside the cultivation room from being overheated and hold the temperature inside the cultivation room in a temperature condition suitable for growing the plant. In addition, it is possible to hold the humidity inside the cultivation room in a humidity condition suitable for growing the plant.

As shown in Fig. 4, the nozzles 5 may be attached to the piping header 3 in a staggered arrangement in the longitudinal direction of the cultivation room.

Because other constructions are identical to those of the above-described embodiment, the description thereof is omitted herein by denoting like parts by like reference numerals.

As shown in Fig. 5, it is possible to arrange cultivation rooms 2-1 and 2-2 each having a length of 5700cm and a width of 900cm in parallel with each other, mount piping headers 3-1 and 3-2 at the center of the cultivation rooms 2-1 and 2-2 respectively, and plumb the nozzles 5 on the piping headers with the nozzles facing each other.

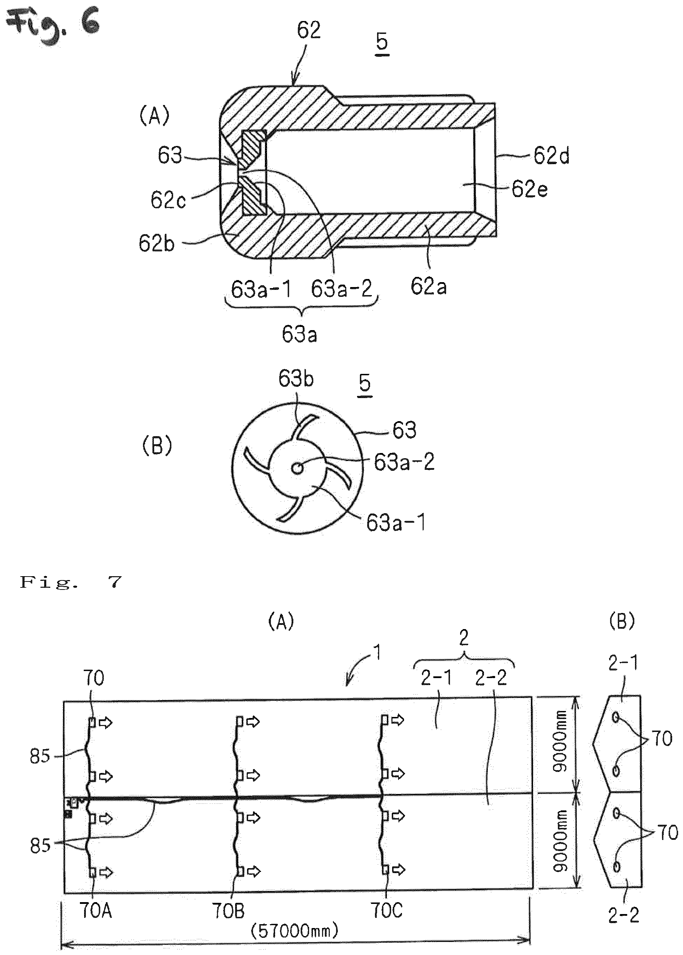

A nozzle shown in Figs. 6(A) and 6(B) may be used as the nozzle 5.

The nozzle 5 consists of the nozzle disclosed in the publication No. 5037897 of Patent obtained by the present applicant. That is, the nozzle 5 is composed of the tubular body 62 and the nozzle tip 63 fixed to the inner surface of the spray-side wall 62b of the body 62. One end of the cylindrical peripheral wall 62a of the body 62 is closed with the spray-side wall 62b. The injection orifice 62c is formed at the center of the spray-side wall 62b. The other end of the peripheral wall 62a is formed as the opening 62d communicating with the supply pipe. Liquid flows into the hollow portion 62e of the body 62.

The nozzle tip 63 is substantially disk-shaped. The nozzle tip 63 is formed when the body 62 is formed by molding a material and is fixed to the inner surface of the spray-side wall 62b of the body 62. The nozzle tip 63 has the injection hole 63a at its central portion. The injection hole 63a communicates with the injection orifice 62c disposed at the center of the spray-side wall 62b of the body 62. A nutrient solution and water are sprayed as a swirling flow through the injection hole 63a and the injection orifice 62c. The injection hole 63a is composed of a tapered hole portion 63a-1 whose diameter decreases in a direction from the inflow side and a small-diameter hole portion 63a-2 continuous with the tapered hole portion 63a-1 and communicating with the injection orifice 62c. Swirling grooves 63b each curved in the shape of an arc are formed on the inner surface of the nozzle tip 63 at intervals of 90 degrees. The inner peripheral edge of each swirling groove 63b communicates with the periphery of the tapered hole portion 63a-1 to flow the liquid into the small-diameter hole portion 63a-2 through the swirling groove 63b with the liquid swirling.

At the injection side of the nozzle 5, water flowing into the body 62 from the ring header 53 flows into the tapered hole portion 63a-1 of the injection hole 63a as a swirling flow through the swirling groove 63b of the nozzle tip 63. Because inside the tapered hole portion 63a-1, the water collides with the inner circumferential surface of the tapered hole portion 63a-1 with the water swirling. As a result, droplets are atomized and flow from the tapered hole portion 63a-1 into the small-diameter hole portion 63a-2 disposed at the injection side. Thereafter the atomized droplets are injected as semi-dry fog consisting of fine droplets whose diameters are not more than 100µm and whose average particle diameter is not less than 10µm nor more than 30µm from the injection orifice 62c of the body 62 communicating with the small-diameter hole portion 63a-2.

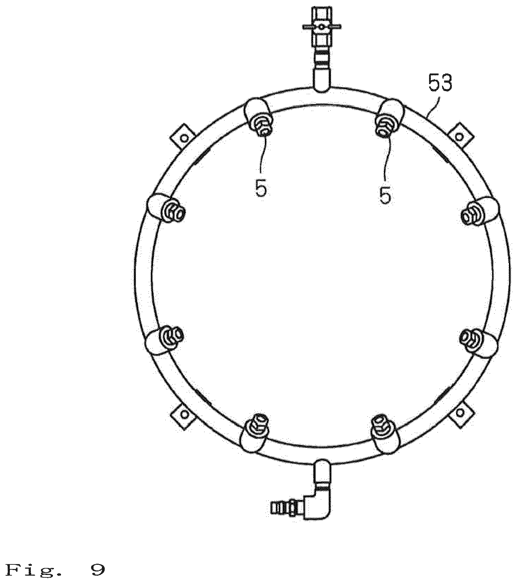

Figs. 7 through 10 show a an example not falling within the scope of the claims. As shown in Fig. 7, in the example, blowers 70 are installed inside the cultivation rooms 2 (2-1, 2-2) of the plant cultivation house 1. More specifically, two air blowers 70A are disposed at both sides of one end of each cultivation room having a length of 57000mm and a width of 9000mm in the longitudinal direction of the cultivation room. Two air blowers 70B are disposed at both sides of the center of each cultivation room in the longitudinal direction of the cultivation room. Two air blowers 70C are disposed at both sides of the other end of each cultivation room in the longitudinal direction thereof. Thus, a total of six air blowers 70 are installed inside each cultivation room.

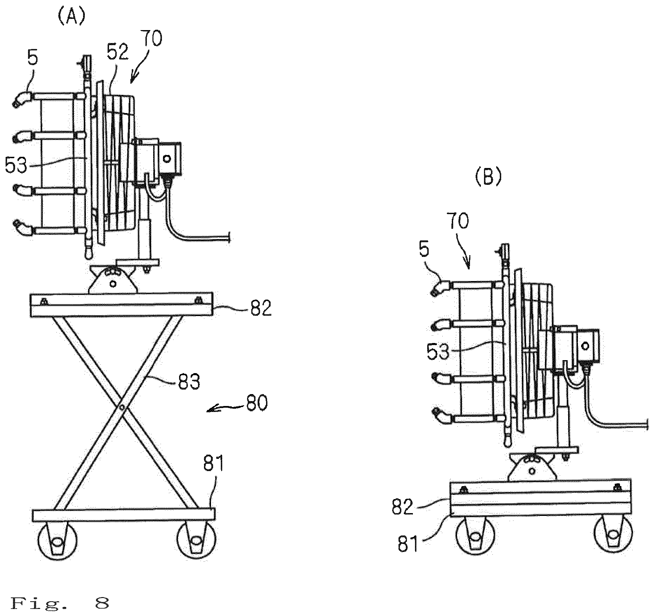

As shown in Fig. 8, each air blower 70 is installed on an elevating machine 80. A lower platform 81 and an upper platform 82 of the elevating machine 80 are coupled to each other with an X-type coupling member 83 which can be placed in rise and fall states. As shown in Fig. 8(A), when the X-type coupling member 83 is placed in the rise state, the air blower 70 installed on the upper platform 82 is placed at a high position. When the X-type coupling member 83 is placed in the fall state by folding it, the air blower 70 installed on the upper platform 82 is placed at a low position. The air blower 70 can be selectively located at the low position and the high position. A running wheel is mounted on a lower surface of the lower platform 81 to transport the air blower to arbitrary positions.

At required intervals, the nozzles 5 are attached to a ring header 53 provided on a wind blow-out side outer periphery of a case 52 incorporating a fan of each air blower 70. The nozzles 5 are attached to an inner peripheral side of the ring header 53 by tilting the nozzles 20 to 50 degrees (45 degrees in this embodiment) to speed up a spray speed by mixing the spray injected from the nozzles 5 with air blown out from the fan.

The diameter of the air blower is set to 40cm to 55cm. The nozzles 5 are attached to the ring header 53 at intervals of 10cm to 20cm. A highpressure hose 85 for supplying the liquid chemical and water to the ring header 53 is connected thereto to spray the mixture of the liquid chemical and the water from the nozzles 5. The supply path for supplying the liquid chemical from the liquid chemical tank to the ring header 53 and the supply path for supplying the water to the ring header 53 are similar to those of the first embodiment. Thus, the description thereof is omitted herein. The control device automatically executes the start and stop of the spray of the liquid chemical, the subsequent supply of cleaning water, the start and stop of the spray for fine mist cooling and the spray for humidification as in the case of the first embodiment.

The air blower 70 is attached to a bracket mounted on the upper platform 82 in such a way that the air blower is capable of tilting downward and upward.

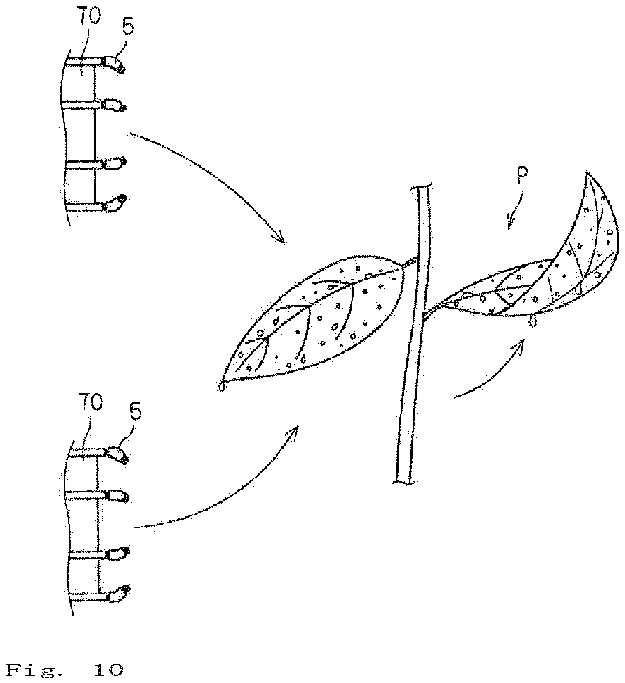

In the example not falling within the scope of the claims, the air blower 70 having the nozzle 5 can be selectively disposed at the low position and the high position, as shown in Fig. 10. When the liquid chemical is sprayed, the air blower 70 is set at the low position to spray the liquid chemical upward toward the lower surfaces of leaves of the plant P. The air blower 70 is sometimes set at the high position to spray the liquid chemical downward toward the upper sides of the leaves of the plant P. By spraying the liquid chemical toward both surfaces of the leaves, it is possible to efficiently exterminate pests by the liquid chemical.

On the other hand, when water is sprayed for fine mist cooling and humidification, the air blower 70 is set at the high position to spray the water downward for efficient cooling and humidification.

Because the other constructions and action of the example are similar to those of the above-described embodiment, the description thereof is omitted herein.

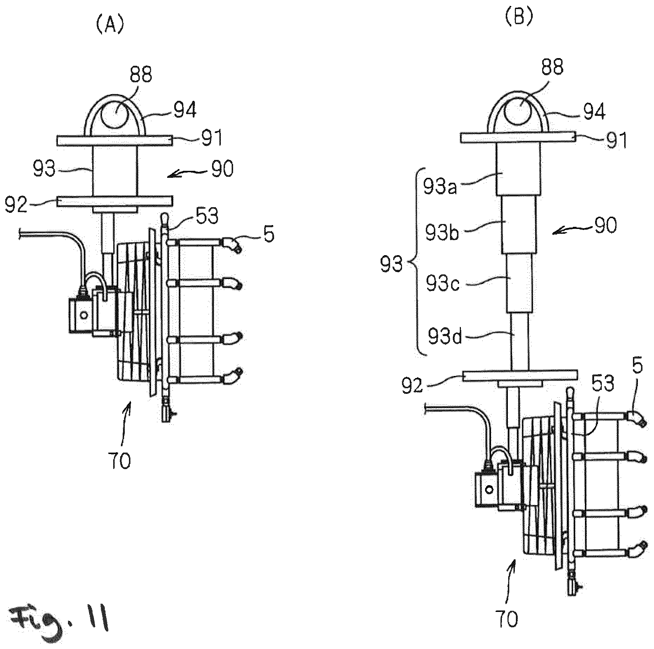

Figs. 11(A) and 11(B) show a modification of the example .

In the modification, a mounting ring 94 projectingly mounted on an upper plate 91 of an elevating machine 90 is hooked on a supporting beam 88 mounted at an upper part inside the cultivation room to hang the elevating machine 90 toward the plant in an upper space. A multi-stage telescopic rod 93 is interposed between the upper plate 91 and the lower plate 92 thereof to hang the air blower 70 from a lower surface of the lower plate 92.

The multi-stage telescopic rod 93 has telescopic rods 93a through 93d consisting of large and small cylinders. As shown in Fig. 11(A), by accommodating the cylinders 93b through 93d in the upper-stage largest cylinder 93, the air blower 70 is located at a high position. As shown in Fig. 11(B), by stretching all of the cylinders 93a through 93d, the air blower 70 is located at a low position.

At cooling and humidifying times, the air blower 70 is set at the high position to spray water downward from the nozzles 5 attached to the ring header 53, whereas at a pest controlling time when the liquid chemical is sprayed, the air blower 70 is set at the low position, and the nozzles 5 are turned upward to spray the liquid chemical toward the lower surfaces of leaves of the plant.

Because the other constructions of the modification are similar to those of the example, the description thereof is omitted herein.

### EXPLANATION OF REFERENCE SYMBOLS AND NUMERALS

- 1:: plant cultivation house
- 2:: cultivation room
- 3:: piping header
- 5:: nozzle
- 10:: liquid chemical tank
- 11:: water tank
- 53:: ring header
- 70:: air blower
- 80, 90:: elevating machine

## Claims

1. A device for controlling pests in a plant cultivation room (2), comprising a spray means having nozzles (5) for spraying a liquid chemical containing a pest control agent inside a plant cultivation room (2); wherein
piping headers (3) configured to be installed in an upper space inside said plant cultivation room;
said nozzles (5) are attached to each of said piping headers at certain intervals;
diameters of droplets sprayed from said nozzles (5) are not more than 100µm, and an average particle diameter of said droplets is not less than 10µm nor more than 30µm;
said nozzles (5) are so disposed that sprays injected from said nozzles uniformly fill an entire region inside said plant cultivation room;
a control device (15) for spraying said liquid chemical from said nozzles (5) so that a humidity inside said plant cultivation room becomes not less than 90% nor more than 100% is provided; and
through a change-over valve (12), a liquid chemical-side branch pipe and a water-side branch pipe are coupled to a liquid flow pipe (6) connected to said nozzle-attached piping headers (3) to supply water to said nozzles as cleaning water after said liquid chemical is supplied to said nozzles and selectively use said nozzles as fine mist spraying nozzles for cooling the air inside said plant cultivation room and as nozzles for humidifying said air inside said plant cultivation room.

2. The device for controlling pests according to claim 1, wherein said nozzles (5) each having a spray amount of 0.37ml/second to 5.61ml/second, a spray pressure of 2MPa to 6MPa, and a spray angle of 50 to 80 degrees are attached to said piping headers (3) at intervals of 100cm to 300cm.

3. The device for controlling pests according to claims 1 or 2, further comprising a hygrometer configured to be installed inside said plant cultivation room, and a control device for receiving a detected value from said hygrometer the control device being configured to turn on and off said spray of said liquid chemical from said nozzles (5) so that said detected value falls within a set range.

4. The device for controlling pests according to claims 1 or 2, comprising a control device (15) which sets a condition of starting said spray of said liquid chemical and a condition of stopping said spray of said liquid chemical in advance and which has a program for spraying cleaning water for a predetermined period of time after said spray of said liquid chemical is stopped; and
start of said spray of said liquid chemical from said nozzles, stop of said spray thereof, and subsequent cleaning are executed unattendedly at regular intervals based on said program registered in said control device.

5. The device for controlling pests according to any one of claims 1 through 4, wherein said nozzles (5) are attached to said piping headers (3) configured to extend in a longitudinal direction of said plant cultivation room by adjacently disposing said nozzles at certain intervals in a longitudinal direction of said piping headers in such a way that spray ranges of said nozzles contact each other or are spaced at gaps not more than 300cm, and
said nozzles (5) are attached to both side surfaces of said piping headers in a width direction thereof orthogonal to said longitudinal direction thereof by disposing said nozzles oppositely to each other or arranging said nozzles in a staggered manner.

6. The device for controlling pests according to any one of claims 1 through 5, wherein said nozzle (5) has a nozzle tip (21) having an injection orifice (21) formed at a liquid flow-out side of a check valve (20) whose stop valve (24) is urged toward a valve closing direction.

## Patentansprüche

1. Vorrichtung zur Bekämpfung von Schädlingen in einem Pflanzenzuchtraum (2), umfassend ein Sprühsystem, das Düsen (5) aufweist, um eine flüssige Chemikalie, die ein Schädlingsbekämpfungsmittel enthält, innerhalb des Pflanzenzuchtraums (2) zu sprühen; wobei
Verteilerrohre (3) dazu konfiguriert sind, in einem oberen Raum innerhalb des Pflanzenzuchtraums eingebaut zu sein;
die Düsen (5) in bestimmten Intervallen jeweils an den Verteilerrohren angebracht sind;
Durchmesser von Tröpfchen, die aus den Düsen (5) gesprüht werden, nicht größer als 100 µm sind und ein Durchschnitts-Partikeldurchmesser der Tröpfchen nicht weniger als 10 µm und nicht mehr als 30 µm beträgt;
die Düsen (5) so angeordnet sind, dass aus den Düsen eingespritzte Sprühstrahlen einen gesamten Bereich innerhalb des Pflanzenzuchtraums gleichmäßig füllen;
eine Steuerungsvorrichtung (15) zum Sprühen der flüssigen Chemikalie aus den Düsen (5) vorgesehen ist, sodass eine Feuchtigkeit innerhalb des Pflanzenzuchtraums nicht unter 90% fällt und 100% nicht übersteigt; und
durch ein Umschaltventil (12) eine Chemikalienflüssigkeitsseiten-Zweigleitung und eine Wasserseiten-Zweigleitung mit einer Flüssigkeits-Strömungsleitung (6) gekoppelt sind, die mit den mit Düsen versehenen Verteilerrohren (3) verbunden ist, um Wasser als Reinigungswasser an die Düsen zu leiten, nachdem die flüssige Chemikalie an die Düsen geliefert wurde, und die Düsen wahlweise als Feinnebelsprühdüsen, um die Luft innerhalb des Pflanzenzuchtraums zu kühlen, und als Düsen zum Befeuchten der Luft innerhalb des Pflanzenzuchtraums zu nutzen.

2. Vorrichtung zur Bekämpfung von Schädlingen gemäß Anspruch 1, wobei die Düsen (5), die jeweils eine Sprühleistung von 0,37 ml/s bis 5,61 ml/s, einen Sprühdruck von 2 MPa bis 6 MPa und einen Sprühwinkel von 50 bis 80 Grad haben, in Intervallen von 100 cm bis 300 cm an den Verteilerrohren (3) befestigt sind.

3. Vorrichtung zur Bekämpfung von Schädlingen gemäß Anspruch 1 oder 2, ferner umfassend ein Hygrometer, das dazu konfiguriert ist, innerhalb des Pflanzenzuchtraums eingebaut zu sein, und eine Steuerungsvorrichtung zum Empfangen eines erfassten Werts aus dem Hygrometer, wobei die Steuerungsvorrichtung dazu konfiguriert ist, das Sprühen der flüssigen Chemikalie aus den Düsen (5) ein- und auszuschalten, sodass der erfasste Wert innerhalb eines Sollbereichs fällt.

4. Vorrichtung zur Bekämpfung von Schädlingen gemäß Anspruch 1 oder 2, umfassend eine Steuerungsvorrichtung (15), die eine Bedingung zum Einschalten des Sprühens der flüssigen Chemikalie und eine Bedingung zum Ausschalten des Sprühens der flüssigen Chemikalie im Voraus einstellt und die ein Programm zum Sprühen von Reinigungswasser über einen vorbestimmten Zeitraum aufweist, nachdem das Sprühen der flüssigen Chemikalie ausgeschaltet wurde; und
ein Einschalten des Sprühens der flüssigen Chemikalie aus den Düsen, ein Ausschalten des Sprühens davon und ein nachfolgendes Reinigen ohne äußeres Zutun und in regelmäßigen Zeitintervallen auf Basis des Programms durchgeführt werden, das in der Steuerungsvorrichtung registriert ist.

5. Vorrichtung zur Bekämpfung von Schädlingen gemäß einem der Ansprüche 1 bis 4, wobei die Düsen (5) an den Verteilerrohren (3) befestigt sind, die dazu konfiguriert sind, sich in einer Längsrichtung des Pflanzenzuchtraums zu erstrecken, indem die Düsen in bestimmten Intervallen in einer Längsrichtung des Verteilerrohre in einer solchen Weise einander benachbart angeordnet werden, dass Sprühreichweiten der Düsen einander berühren oder mit Lücken voneinander beabstandet sind, die nicht größer als 300 cm sind, und
die Düsen (5) an beiden Seitenflächen der Verteilerrohre in deren Breitenrichtung senkrecht zur Längsrichtung befestigt sind, indem die Düsen einander gegenüber angeordnet sind oder die Düsen in einer versetzen Weise angeordnet sind.

6. Vorrichtung zur Bekämpfung von Schädlingen gemäß einem der Ansprüche 1 bis 5, wobei die Düse (5) eine Düsenmündung (21) hat, die eine Einspritzöffnung (21) hat, die auf einer Flüssigkeits-Auslassseite eines Rückschlagventils (20) ausgebildet ist, dessen Verschlussventil (24) in eine Ventilverschlussrichtung gespannt ist.

## Revendications

1. Dispositif pour lutter contre les organismes nuisibles dans une salle de culture de plantes (2), comprenant un moyen de pulvérisation ayant des buses (5) pour pulvériser un produit chimique liquide contenant un agent de lutte contre les organismes nuisibles dans une salle de culture de plantes (2) ;
des collecteurs de tuyauterie (3) étant configurés pour être installés dans un espace supérieur dans ladite salle de culture de plantes ;
lesdites buses (5) étant fixées sur chacun desdits collecteurs de tuyauterie à certains intervalles ;
les diamètres des gouttes pulvérisées depuis lesdites buses (5) ne sont pas supérieures à 100 µm, et un diamètre particulaire moyen desdites gouttes n'est pas inférieur à 10 µm ni supérieur à 30 µm ;
lesdites buses (5) étant disposées de sorte que les pulvérisations injectées depuis lesdites buses remplissent uniformément toute une région dans ladite salle de culture de plantes ;
un dispositif de contrôle (15) pour pulvériser ledit produit chimique liquide depuis lesdites buses (5) de sorte qu'une humidité dans ladite salle de culture de plantes devient non inférieure à 90 % ni supérieure à 100 %, étant prévu ; et
par le biais d'une soupape d'inversion (12), un tuyau de ramification du côté du produit chimique liquide et un tuyau de ramification du côté de l'eau étant couplés à un tuyau d'écoulement de liquide (6) raccordé auxdits collecteurs de tuyauterie fixés à la buse (3) pour fournir l'eau auxdites buses en tant qu'eau de nettoyage après que ledit produit chimique liquide a été fourni auxdites buses et utiliser sélectivement lesdites buses en tant que buses de pulvérisation de brouillard fin pour refroidir l'air dans ladite salle de culture de plantes et en tant que buses pour humidifier ledit air dans ladite salle de culture de plantes.

2. Dispositif de lutte contre les organismes nuisibles selon la revendication 1, dans lequel lesdites buses (5) ayant chacune une quantité de pulvérisation de 0,37 ml/seconde à 5,61 ml/seconde, une pression de pulvérisation de 2MPa à 6 MPa, et un angle de pulvérisation de 50 à 80 degrés, sont fixées auxdits collecteurs de tuyauterie (3) à des intervalles de 100 cm à 300 cm.

3. Dispositif de lutte contre les organismes nuisibles selon les revendications 1 ou 2, comprenant en outre un hygromètre configuré pour être installé à l'intérieur de ladite salle de culture de plantes, et un dispositif de contrôle pour recevoir une valeur détectée dudit hygromètre, le dispositif de contrôle étant configuré pour activer et désactiver ladite pulvérisation dudit produit chimique liquide desdites buses (5) de sorte que ladite valeur détectée tombe dans une plage de consigne.

4. Dispositif de lutte contre les organismes nuisibles selon les revendications 1 ou 2, comprenant un dispositif de contrôle (15), qui détermine à l'avance une condition de démarrage de ladite pulvérisation dudit produit chimique liquide et une condition d'arrêt de ladite pulvérisation dudit produit chimique liquide et qui a un programme pour pulvériser de l'eau de nettoyage pendant une période de temps prédéterminée après que ladite pulvérisation dudit produit chimique liquide s'est arrêtée ; et
le démarrage de ladite pulvérisation dudit produit chimique liquide depuis lesdites buses, l'arrêt de ladite pulvérisation et le nettoyage consécutif sont exécutés de manière autonome à intervalles réguliers sur la base dudit programme enregistré dans ledit dispositif de contrôle.

5. Dispositif de lutte contre les organismes nuisibles selon l'une quelconque des revendications 1 à 4, dans lequel lesdites buses (5) sont fixées auxdits collecteurs de tuyauterie (3) configurés pour s'étendre dans une direction longitudinale de ladite salle de culture de plantes en disposant, de manière adjacente, lesdites buses à certains intervalles dans une direction longitudinale desdits collecteurs de tuyauterie de sorte que les plages de pulvérisation desdites buses sont en contact entre elles ou sont espacées par des interstices non supérieurs à 300 cm, et
lesdites buses (5) sont fixées aux deux surfaces latérales desdits collecteurs de tuyauterie dans leur direction de largeur orthogonale à ladite direction longitudinale en disposant lesdites buses de manière opposée l'une à l'autre ou en agençant lesdites buses de manière échelonnée.

6. Dispositif de lutte contre les organismes nuisibles selon l'une quelconque des revendications 1 à 5, dans lequel ladite buse (5) a une pointe de buse (21) ayant un orifice d'injection (21) formé d'un côté de sortie de liquide d'un clapet anti-retour (20), dont la valve d'arrêt (24) est poussée vers une direction de fermeture de valve.
